# EUROPEAN PATENT APPLICATION

(11) **EP 2 628 907 A2**
(43) Date of publication of application: **21.08.2013**
(21) Application number: 12198441.3
(22) Date of filing: 20.12.2012
(51) Int. Cl.: F01K 13/00

(54) **Power plant**

(30) Priority: 04.01.2012 US 201213343226
(71) Applicant: General Electric Company, Schenectady, NY 12345 (US)
(72) Inventor: Kim, Kihyung, Atlanta, GA Georgia 30339 (US); Gardiner, Barrett David, Schenectady, NY New York 12345 (US); Rancruel, Diego Fernando, Greenville, SC South Carolina 29615 (US)
(74) Representative: Cleary, Fidelma

(57) **Abstract**

A power plant includes a compressor (14) configured to compress inlet air for combustion. The power plant also includes an air separation unit (22) configured to receive and remove nitrogen from an air supply. The power plant further includes a fluid manipulator (30) operably coupled to the air separation unit (22) and the compressor (14), wherein the fluid manipulator is configured to receive nitrogen removed from the air separation unit (22) at an inlet pressure and an inlet temperature and produce a modified pressure and a modified temperature of the nitrogen prior to selectively delivering the nitrogen to the compressor (14).

## Description

### BACKGROUND OF THE INVENTION

The subject matter disclosed herein relates to combined cycle power plants, and more particularly to combined cycle power plants in which modified condition nitrogen is introduced into a gas turbine inlet.

In integrated combined cycle (IGCC) or integrated reforming combined cycle (IRCC) power plants, nitrogen is available from an air separation unit (ASU) that can be used as a fuel diluent to suppress the formation of NOx and to augment power generation. This nitrogen is commonly injected directly into the combustor or blended with the fuel.

The injection of nitrogen into the combustor or the blending of the nitrogen with the fuel demands a relatively high level of operational and control complexity in integrating the nitrogen compression, the blending and the flow control operations. In addition, the injection of nitrogen to the combustor or as blending with the fuel increases turbine inlet flow, which can increase compressor pressure ratio beyond allowable operational capability. As a result, use of the nitrogen is often limited or disregarded with some or all of the nitrogen being vented. However, in these cases, there is typically a further need to abate NOx emissions, incurring a performance penalty that increases capital and operating costs.

### BRIEF DESCRIPTION OF THE INVENTION

According to one aspect of the invention, a power plant includes a compressor configured to compress inlet air for combustion. The power plant also includes an air separation unit configured to receive and remove nitrogen from an air supply. The power plant further includes a fluid manipulator operably coupled to the air separation unit and the compressor, wherein the fluid manipulator is configured to receive nitrogen removed from the air separation unit at an inlet pressure and an inlet temperature and produce a modified pressure and a modified temperature of the nitrogen prior to selectively delivering the nitrogen to the compressor.

According to another aspect of the invention, a power plant includes a compressor configured to compress inlet air for combustion. The power plant also includes an air separation unit configured to receive and remove a separated air component from an air supply. The power plant further includes a fluid manipulator operably coupled to the air separation unit and the compressor, wherein the fluid manipulator receives the separated air component at a first pressure and a first temperature and selectively delivers the separated air component to the compressor at a second pressure and a second temperature.

According to yet another aspect of the invention, a method of operating a power plant includes removing nitrogen from an air supply. The method also includes introducing the nitrogen removed from the air supply into a vortex tube. The method further includes modifying a pressure and a temperature of the nitrogen within the vortex tube to produce a modified nitrogen. The method yet further includes delivering the modified nitrogen to a compressor of the power plant.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic diagram of a combined cycle power plant having an air separation unit;
FIG. 2 is a side, cross-sectional view of a vortex tube of the power plant; and
FIG. 3 is a schematic diagram of the combined cycle power plant having an air separation unit and a plurality of vortex tubes.

The detailed description explains embodiments of the invention, together with advantages and features, by way of example with reference to the drawings.

### DETAILED DESCRIPTION OF THE INVENTION

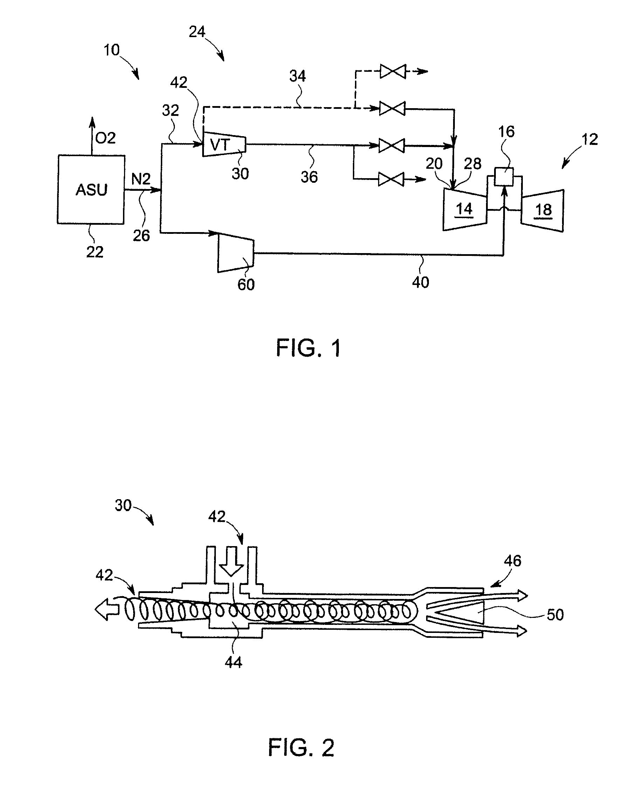

Referring to FIG. 1, a power plant 10, such as a combined cycle power plant, an integrated gasification combined cycle (IGCC) power plant, or an integrated reforming combined cycle (IRCC) power plant, generally comprises a gas turbine 12. The gas turbine 12 includes a compressor 14, in which inlet air is compressed in preparation for combustion operations, a combustor 16, in which combustion occurs, and a turbine 18, in which the products of the combustion are harnessed for power generation. The gas turbine 12 also includes an inlet 20, in which inlet air is received upstream of the compressor 14.

A separation unit 22, such as an air separation unit 22, receives and removes an air component, such as nitrogen (N₂), from an air supply, which may be provided from atmosphere surrounding the gas turbine 12. After passing through the air separation unit 22, the removed nitrogen will generally be substantially, but possibly not entirely, pure. Nitrogen is merely one air component that may be received and removed from the air supply, and it is understood that the air separation unit 22 is capable of receiving and removing various other components commonly found in atmospheric air.

A system 24 is operably coupled to the air separation unit 22 at a first portion 26 and to the gas turbine 12 at a second portion 28. Specifically, the system 24 is operably coupled at the second portion 28 to one or more components of the gas turbine 12, such as the compressor 14, the combustor 16, and/or proximate the inlet 20. The system 24 is configured to receive a portion of the nitrogen removed from the air separation unit 22 and deliver the nitrogen to the inlet 20, the compressor 14, and/or the combustor 16. The system 24 comprises a fluid manipulator, such as a vortex tube 30, an inlet line 32 operably connecting the air separation unit 22 to the vortex tube 30, at least one hot outlet line 34, and at least one cold outlet line 36. Each outlet line 34, 36 operably connects the vortex tube 30 with the gas turbine 12 at the second portion 28 of the system 24. Additionally, the system 24 transports at least part of the nitrogen removed from the air separation unit 22 into a nitrogen compressor 60. From the nitrogen compressor 60, the nitrogen is transported through a combustion line 40 to the combustor 16 at a pressure sufficient to directly inject the nitrogen into the combustor 16 or blend with fuel. It should be appreciated that the system 24 may be used in combination with the nitrogen compressor 60, or independently thereof. Employing the system 24 in combination with the nitrogen compressor 60 may be desirable to achieve better performance and improve gas turbine operability, however, the application will determine whether the inclusion of the nitrogen compressor 60 is advantageous and the desired flow proportioning between system 24 and nitrogen compressor 60 when used in combination.

Referring now to FIG. 2, the vortex tube 30 comprises an inlet 42 that receives the removed nitrogen from the air separation unit 22 via the inlet line 32. The nitrogen is injected into a vortex generation chamber 44 that promotes swirling of the nitrogen within the vortex generation chamber 44. The vortex tube 30 has a hot outlet 46 and a cool outlet 48 that are typically located at distal ends from one another and disposed substantially perpendicular to the inlet 42. A control valve 50 at the hot outlet 46 regulates the hot nitrogen flow fraction being expelled from the vortex tube 30. The flow fraction in between hot and cool streams reduction determines the cool/hot outlet temperatures. The cool outlet 48 is comprised of an orifice that is configured to expel cool nitrogen from the vortex tube 30 and transfer the cool nitrogen to the gas turbine 12. References made to "cool" and "hot" are merely temperature conditions relative to the temperature of the nitrogen when entering the inlet 42 of the vortex tube 30.

The removed nitrogen typically exits the air separation unit 22 at a pressure higher than atmospheric pressure and is reduced to near substantially atmospheric pressure upon exit of the vortex tube 30 for introduction into the gas turbine 12. By operation, the vortex tube 30 functions to modify the nitrogen properties from a first temperature and first pressure at the inlet 42 of the vortex tube and exit the vortex tube 30 via the hot outlet 46 and the cool outlet 48 at respective second temperatures and second pressures. For example, nitrogen removed from the air separation unit 22 and introduced to the vortex tube 30 may have a pressure of approximately 55 psia and a temperature of 90°F at the inlet 42, while exiting the hot outlet 46 and the cool outlet 48 at substantially near ambient pressure and at 160°F and 20°F, respectively. The pressures and temperatures noted are merely illustrative and the actual inlet and outlet conditions may be modified to suit the application of use.

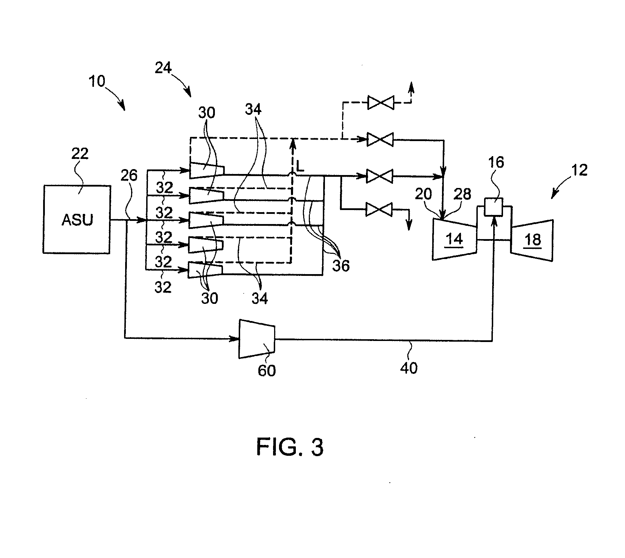

Referring to FIG. 3, an embodiment is illustrated having a plurality of vortex tubes 30 operably connected to the air separation unit 22 for receiving the removed nitrogen and functioning in a manner similar to that described above. The number of vortex tubes 30 employed in the power plant 10 may be modified and suited to the application requirements.

In accordance with another aspect of the invention, a method of operating the power plant 10 is provided. The method includes employing the air separation unit 22 to remove nitrogen from an air supply, such as atmospheric air, and introducing the nitrogen removed from the air supply into the vortex tube 30. As described above, the vortex tube 30 is configured to drop the pressure and to modify the temperature of the removed nitrogen prior to selectively delivering the nitrogen to the gas turbine 12. Typically, the removed nitrogen will be delivered to the compressor 14, or the inlet 20 upstream of the compressor 14. Temperature conditions of the nitrogen are controlled by operation of the control valve 50 of the vortex tube 30, such that desired effects may be imparted on the gas turbine 12, thereby improving overall power plant 10 performance.

The power plant 10 advantageously includes one or more vortex tubes 30 that are able to manipulate temperature and/or flow rate of removed nitrogen, or other atmospheric air components, prior to introduction to the gas turbine 12. Various improvements in the gas turbine 12 operation can be achieved by controlling delivery of relatively heated or cooled nitrogen. Such improvements include heating and cooling of gas turbine components, particularly at the inlet, and manipulation of inlet flow conditions. For example, relatively cool nitrogen drops the gas turbine inlet temperature and increases overall gas turbine power output. Additionally, relatively heated nitrogen can improve gas turbine operability (with respect to compressor surge limit), assist part load efficiency, and provide anti-icing protection in cold condition operation.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power plant comprising:
a compressor (14) configured to compress inlet air for combustion;
an air separation unit (22) configured to receive and remove nitrogen from an air supply; and
a fluid manipulator (30) operably coupled to the air separation unit (22) and the compressor (14), wherein the fluid manipulator is configured to receive nitrogen removed from the air separation unit (22) at an inlet pressure and an inlet temperature and produce a modified pressure and a modified temperature of the nitrogen prior to selectively delivering the nitrogen to the compressor (14).

2. The power plant of claim 1, wherein the fluid manipulator is a vortex tube having a vortex inlet, a high temperature outlet, and a low temperature outlet.

3. The power plant of claim 2, wherein the vortex inlet receives the nitrogen removed from the air separation unit at a higher than ambient pressure.

4. The power plant of claim 2 or claim 3, wherein the vortex tube further comprises a valve proximate the high temperature outlet for selectively controlling the modified temperature of the nitrogen delivered to the compressor.

5. The power plant of any one of claims 2 to 4, further comprising a nitrogen compressor configured to receive nitrogen from the air separation unit and to deliver compressed nitrogen directly to a combustor.

6. The power plant of any one of claims 2 to 5, wherein the modified temperature of the nitrogen delivered to the compressor is greater than the inlet temperature.

7. The power plant of any one of claims 2 to 5, wherein the modified temperature of the nitrogen delivered to the compressor is less than the inlet temperature.

8. The power plant of any one of claims 2 to 7, further comprising a plurality of vortex tubes.

9. A power plant comprising:
a compressor configured to compress inlet air for combustion;
an air separation unit configured to receive and remove a separated air component from an air supply;
a fluid manipulator operably coupled to the air separation unit and the compressor, wherein the fluid manipulator receives the separated air component at a first pressure and a first temperature and selectively delivers the separated air component to the compressor at a second pressure and a second temperature.

10. The power plant of claim 9, wherein the fluid manipulator is a vortex tube having a vortex inlet, a high temperature outlet, and a low temperature outlet.

11. The power plant of claim 9 or claim 10, wherein the separated air component is nitrogen.

12. The power plant of claim 11, wherein the vortex inlet receives the nitrogen removed from the air separation unit at a higher than ambient pressure.

13. The power plant of claim 11 or claim 12, wherein the vortex tube further comprises a valve proximate the high temperature outlet for selectively controlling the second temperature of the nitrogen delivered to the compressor.

14. The power plant of any one of claims 11 to 13, wherein the nitrogen delivered to the compressor is delivered at or near relatively ambient pressure.

15. A method of operating a power plant comprising:
removing nitrogen from an air supply;
introducing the nitrogen removed from the air supply into a vortex tube;
modifying a temperature of the nitrogen within the vortex tube to produce a modified nitrogen; and
delivering the modified nitrogen to a compressor of the power plant.
